# EUROPEAN PATENT APPLICATION

(11) **EP 1 761 054 A1**
(43) Date of publication of application: **07.03.2007**
(21) Application number: 05741284.3
(22) Date of filing: 20.05.2005
(51) Int. Cl.: H04N 5/92, G11B 20/10, G11B 27/00, H04N 5/76

(54) **PROGRAM RECORDING DEVICE AND PROGRAM RECORDING METHOD**

(30) Priority: 25.05.2004 JP 2004154358
(71) Applicant: MATSUSHITA ELECTRIC INDUSTRIAL CO., LTD., Osaka 571-8501 (JP)
(72) Inventor: KIDO, Kiyonori c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/009231
(87) International publication number: WO 2005/117432

(57) **Abstract**

To record the beginning and end of each of multiple programs for scheduled recording without missing any part of them and without increasing the size of a processor.

A program recorder includes a control section for outputting an instruction to start or finish recording based on scheduling information and a recording processing section for starting or finishing recording a program in accordance with an instruction to start or finish. If the scheduling information is set for multiple programs, the control section specifies, by reference to time information, a number of consecutive programs according to schedule among the multiple programs scheduled to be recorded, outputs the instruction to start at the broadcast start time of the first one of the programs, outputs the instruction to finish at the broadcast end time of the last one, and generates management information to play back those programs. The recording processing section records a single data stream including the consecutive programs and the management information on a storage medium.

## Description

### TECHNICAL FIELD

The present invention relates to the technique of controlling execution of a scheduled recording operation of a broadcast program.

### BACKGROUND ART

Videocassette recorders (VCRs), which are designed to record a telecast program on a magnetic tape, used to be by far the most popular type of recorders to record a TV program. Recently, however, optical disk recorders for recording a program on a writable optical disk such as a DVD-RAM, a DVD+R, a DVD-R, a DVD+RW, a DVD-RW, or a Blu-ray rewritable have gained widespread popularity. One of the major reasons why the latter type of recorders have become more and more popular lately is that various standards for recording a content as a data stream have been well established these days. Examples of those standards include the DVD-Video, the DVD-Recording and the Blu-ray Rewritable.

To start or finish recording a program, a recorder needs to perform a recording starting process and a recording finishing process. In recording an analog broadcast, for example, a VCR performs the starting process, including driving the tape, selecting the channel of a desired program, and converting the program signal, starts recording the program, and then performs the finishing process including stopping the tape, thereby finishing recording the program.

The starting and finishing processes of an optical disk recorder are more complicated. Specifically, recording on an optical disk (e.g., a DVD-RAM) is not started until the starting process, including not only driving the optical disk, moving the optical head, and selecting the channel of a desired program but also A/D converting the program signal, accumulating data on the buffer, initializing the encoder and MPEG-2 encoding, is completed. Also, the program cannot finish being recorded until clearing the buffer, writing the data stream management information (such as VOB and CELL) of each program, backing up the management information file, stopping driving the optical disk, and retracting the optical head are done. Besides, in recording a digital broadcast program, the program data needs to be converted into a recordable data format for the optical disk. In that case, the encoded stream of the program needs to be demultiplexed and decoded once and then encoded again, thus taking an even longer time to get the processing done.

It would not matter so much how long it takes to get the starting or finishing process done if no other program should be recorded continuously just before or after a given program. If another program should be recorded continuously, however, the amount of that time should be taken into account. This is particularly important in a scheduled recording operation, which is to be performed while the user is not present there. If two programs are recorded back to back in response to user's manipulations, the user can check the contents of those programs even when it takes a lot of time to get the starting and finishing processes done. During the scheduled recording operation, however, the user is often not present there. That is why if it took a lot of time to get the starting and finishing processes done, then the recording operation would be affected seriously.

Patent Document No. 1 discloses how a VCR performs a scheduled recording operation in a situation where programs scheduled to be recorded are consecutive with each other according to schedule. If those programs will go on the air consecutively, the VCR performs the recording operation continuously and writes a header code at the recording start point of each of those programs. And in starting a playback operation, a desired program can be found quickly by detecting the header code. According to the technique disclosed in Patent Document No. 1, however, the storage medium is a videocassette tape, and therefore, random accessibility to be achieved in an optical disk by separately writing a stream and management information thereon is not realized. For example, it is not until the tape is actually played or the top of a program is found that the user knows whether or not the recorded data includes a plurality of programs. This is because boundary information is written only for the stream.

Hereinafter, it will be described how an optical disk recorder performs a scheduled recording operation in a situation where two programs to go on the air consecutively have been scheduled to be recorded. A recorder for performing a continuous recording operation is disclosed in Patent Document No. 2, for example.

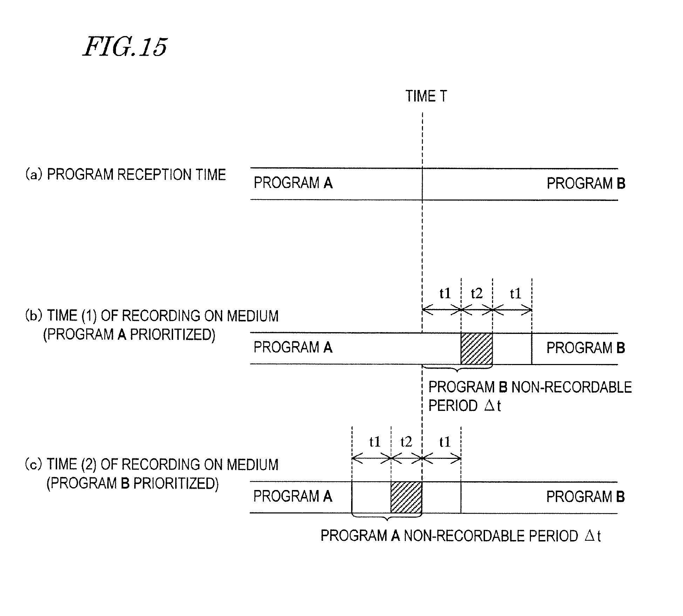

FIG. **15(a)** shows Programs **A** and **B** to be received continuously. The reception of Program **A** is supposed to end at a time **T,** when the reception of Program **B** is supposed to start. It should be noted that the transmission of a program from a broadcaster is supposed to be substantially synchronous with the reception of the program at the optical disk recorder, i.e., no time delay is supposed to be caused between these two events.

FIG. **15(b)** shows the times when Programs **A** and **B are** recorded on a medium (such as a DVD-RAM) in a situation where the recording of Program **A** has been prioritized. It takes a rather long time for the optical disk recorder to finish A/D converting the program signal, accumulating the data on the buffer and doing MPEG-2 compression coding. That is why there is a time lag between the reception end time and the recording end time. FIG. **15(b)** shows that Program **A,** of which the broadcasting and reception both ended at the time **T,** has been recorded on the optical disk at a time **(T+t1)**. That is to say, it took an amount of time **t1** for the optical disk recorder to finish compression coding of the program signal. Thereafter, the recording finishing process of Program **A** and the recording starting process of Program **B** are carried out in the interval between the time **(T+t1)** and a time **(T+t1+t2).** The reception of Program **B** is started at the time **(T+t1+t2)** and the recording of Program B on the medium is started another **t1** seconds later. According to this processing, Program **A** can be recorded through the end. The amounts of time **t1** and **t2** may be about 60 seconds and about 10 seconds, respectively.

FIG. **15(c)** shows the times when Programs **A** and **B** are recorded on a medium (such as a DVD-RAM) in a situation where the recording of Program **B** has been prioritized. To start recording Program **B** from its very beginning, the optical disk recorder stops receiving Program **A** at the time **(T - t1 - t2)** with the amount of time **t1** it takes to finish compression coding of the program signal and the sum **t2** of the amount of time it takes to get the recording finishing process of Program **A** done and the time it takes to get the recording starting process of Program **B** done into account. In this manner, the optical disk recorder gets ready to start receiving the program signal of Program **B** at the time **T** when Program **B** goes on the air. As a result, Program **B** can start being recorded at its broadcast start time.
Patent Document No. 1: Japanese Utility-Model Application Laid-Open Publication No. 2-110026
Patent Document No. 2: Japanese Patent Application Laid-Open Publication No. 2003-244613

### DISCLOSURE OF INVENTION

### PROBLEMS TO BE SOLVED BY THE INVENTION

If multiple consecutive programs are scheduled to be recorded, a conventional recorder performs the recording finishing process when one of those programs ends and then performs the recording starting process when the next one of the programs starts. As a result, those programs are recorded with at least one of them missed partially, which is a problem.

For example, if the recording of Program **A** is prioritized as shown in FIG. **15(b),** then the next Program **B** will not be recorded for a period of time **Δt** (=t1+t2) even though the program has already started. As a result, the beginning of Program **B** will be missed. On the other hand, if the recording of Program **B** is prioritized as shown in FIG. **15(c),** then the previous Program **A** will not be recorded for a period of **time Δt** (=t1+t2) just before the program ends. Consequently, the end of Program **A** will be missed. That is to say, according to the conventional technique, it is impossible to meet users' demands for recording both the end of the former program and the beginning of the latter program.

A VCR omits the encoding process and so on, and therefore, can shorten the time delay **t1** to a certain degree. Nevertheless, the VCR must also wait in the sum **t2** of the amounts of time it takes to get the recording finishing process of Program **A** and the recording starting process of Program **B** done. As a result, either Program **A** or Program **B** is missed partially at least for the period **t2.**

If multiple processors such as tuners and encoders are provided to get the recording finishing process of Program **A** and the recording starting process of Program **B** done in parallel with each other, then both of these Programs **A** and **B** can be recorded fully without missing any part of them. That is to say, if the recording starting process of Program **B** gets started before Program **A** ends and if Program **B** starts being recorded during the recording finishing process of Program **A** after that, then the end of Program **A** and the beginning of Program **B** can be both recorded. According to this processing, however, some scene is more likely to be recorded twice redundantly. This is because to avoid recording errors, the recording end time would usually be set a little later and the recording start time would usually be set somewhat earlier.

If the same scene is recorded twice redundantly as a result of these parallel recording processes, then the viewer will find unnatural these Programs **A** and **B** being played back continuously. That is why to avoid giving such an impression of unnaturalness to the user who is viewing those recorded programs back to back, the recording operation using multiple processors in parallel is not preferred, either. Besides, if multiple processors were provided to overcome such a problem, then the size and manufacturing cost of the overall processing system would both increase excessively, which is not beneficial at all.

An object of the present invention is to record the beginning and end of multiple consecutive programs scheduled to be recorded without missing any part of them and without increasing the size of the processor and to avoid giving the viewer the impression of unnaturalness even when recorded programs are played back continuously.

### MEANS FOR SOLVING THE PROBLEMS

A program recorder according to the present invention includes: a receiving section for receiving scheduling information, which includes time information that specifies the broadcast start time and broadcast end time of a program for scheduled recording; a memory for storing the scheduling information; a control section for outputting an instruction to start or finish recording processing based on the scheduling information; and a recording processing section for performing the recording processing by receiving a data stream representing the program and recording the data stream on a storage medium. The recording processing section starts recording the program in accordance with the instruction to start and finishes recording the program in accordance with the instruction to finish. If the scheduling information is set for the multiple programs, the control section specifies, by reference to the time information, a number of consecutive programs according to schedule among the multiple programs scheduled to be recorded, outputs the instruction to start recording at the broadcast start time of the first one of the consecutive programs, outputs the instruction to finish recording at the broadcast end time of the last one of the consecutive programs, and generates management information to play back each of the consecutive programs. And the recording processing section records a single data stream including the consecutive programs and the management information on the storage medium.

The program recorder may further include an encoder for generating the data stream by encoding a program signal. The receiving section may further receive the program signal. And the encoder may start encoding in response to the instruction to start and may continue encoding until the encoder receives the instruction to finish.

The receiving section may start receiving a program signal in response to the instruction to start, generate the data stream based on partial data that has been extracted from the program signal received, and continue receiving the program signal until the receiving section receives the instruction to finish.

If no channel change is needed between the consecutive programs, the control section may output the instruction to finish at the broadcast end time of the last program.

The program recorder may further include a switch for selecting one of program signals in response to a control signal. The receiving section may include a plurality of tuners, each of which receives one of the program signals representing mutually different programs and output the signals to the switch. The control section may generate the control signal based on the scheduling information and output the control signal to the switch. And the encoder may encode the signal that has been selected by the switch.

The program recorder may further include a decoder for decoding data about a digital broadcast program to generate a digital broadcast program signal.

One of the tuners may receive the digital broadcast program signal, which is an encoded stream signal made up of multiple packets that store the data about the digital broadcast program. And the switch may select a decoded program signal as the digital broadcast program signal.

One of the tuners may receive a signal representing a digital broadcast program, which is an encoded stream signal made up of multiple packets that store data about the digital broadcast program. In recording the digital broadcast program, the recording processing section may write the encoded stream signal, having a packet structure, on the storage medium.

The control section may generate management information in which the start and end times of each said program are specified by the time information.

If first and second programs are to go on the air consecutively, then the recording processing section may generate management information in which the end time of the first program coincides with the start time of a second program.

If first and second programs are to go on the air consecutively but if channels have been changed between the first and second programs, then the recording processing section may generate management information in which a predetermined time lag is caused between the end time of the first program and the start time of the second program.

The control section may generate path information on a program-by-program basis as the management information.

The control section may generate overall path information, which defines how to play back the consecutive programs from the start time of the first one of the programs through the end time of the last one thereof, and then divide the overall path information, thereby generating path information for each said program.

The control section may generate path information, which defines how to play back each of the consecutive programs from the start time through the end time thereof, on the program-by-program basis.

The control section may generate map information that associates the presentation time of each of the consecutive programs with the data storage location of the data stream to be accessed at the presentation time. And the recording processing section may write the map information on the storage medium.

A program recording method according to the present invention includes the steps of: receiving scheduling information, which includes time information that specifies the broadcast start time and broadcast end time of a program scheduled to be recorded; storing the scheduling information; controlling recording processing by outputting an instruction to start or finish the recording processing based on the scheduling information; and performing the recording processing by receiving a data stream representing the program and recording the data stream on a storage medium. The program starts being recorded in accordance with the instruction to start and finishes being recorded in accordance with the instruction to finish. The method further includes the step of determining whether or not the scheduling information is set for multiple programs. If the scheduling information is set for multiple programs, the step of controlling includes specifying, by reference to the time information, a number of consecutive programs according to schedule among the multiple programs scheduled to be recorded, outputting the instruction to start recording at the broadcast start time of the first one of the consecutive programs, outputting the instruction to finish recording at the broadcast end time of the last one of the consecutive programs, and generating management information to play back each of the consecutive programs. And the step of performing the recording processing includes recording a single data stream including the consecutive programs and the management information on the storage medium.

### EFFECTS OF THE INVENTION

According to the present invention, if there are multiple programs scheduled to be recorded, a number of consecutive programs according to schedule are found by reference to their time information. An instruction to start recording is output at the broadcast start time of the first one of the consecutive programs, and an instruction to finish recording is output at the broadcast end time of the last one thereof. Then, those programs are recorded continuously in accordance with the instruction to start and the instruction to finish. In this manner, the beginning and the end of each program can be recorded without missing any part of them and without increasing the size of the processor.

### BRIEF DESCRIPTION OF DRAWINGS

FIG. **1** shows an arrangement of functional blocks in an optical disk recorder **100** according to a first preferred embodiment of the present invention.
FIG. **2** shows an arrangement of functional blocks in the system control section **300.**
FIG. **3** shows the procedure of scheduled recording processing to be done by the optical disk recorder **100.**
FIG. **4A** shows an optical disk **205** on which a program stream and its management information have been written.
FIG. **4B** shows the file management structure of the file system on the optical disk **205.**
FIG. **5** shows how the correlation between the management information and the program stream becomes after a continuous recording operation has been performed.
FIG. **6** shows a correspondence between the management information that has been subjected to the division process and the program stream.
FIG. **7** shows a configuration for a portion of an optical disk recorder including a plurality of tuners.
FIG. **8** shows an arrangement of (some) functional blocks in an optical disk recorder **110** according to a second preferred embodiment of the present invention.
Portions **(a)** through **(e)** of FIG. **9** show a correlation between a transport stream and a clip AV stream.
FIG. **10** shows a storage area on the optical disk **185** and its directory/file structure.
Portions **(a)** through **(d)** of FIG. **11** show a relationship between the management information and the stream data.
FIG. **12** shows the information (entries) stored in the playlist file **83** and its data structure.
FIG. **13** shows the data structure of a time/address conversion table (EP_MAP) stored in the clip information file **84.**
FIG. **14(a)** shows a relationship between a real playlist **141** and a clip **143** just after Programs **A** and **B** have been recorded on the optical disk (a BD in this case) **185,** and FIG. **14(b)** shows a relationship between the split playlists **141a, 141b** and the clip **143.**
FIG. **15(a)** shows Programs **A** and **B** to be received continuously; FIG. **15(b)** shows the times when Programs **A** and **B** are recorded on a medium in a situation where the recording of Program **A** is prioritized; and FIG. **15(c)** shows the times when Programs **A** and **B** are recorded on the medium in a situation where the recording of Program **B** is prioritized.

### DESCRIPTION OF REFERENCE NUMERALS

- **100**: optical disk recorder
- **201**: tuner
- **202**: A/D converter
- **203**: encoder
- **204**: drive control section
- **205**: optical disk
- **211**: CPU
- **212**: RAM
- **214**: network control section
- **215**: operating switch
- **300**: system control section

### BEST MODE FOR CARRYING OUT THE INVENTION

Hereinafter, preferred embodiments of a program recorder according to the present invention will be described with reference to the accompanying drawings. In the following description, the program recorder is supposed to be implemented as an optical disk recorder.

### EMBODIMENT 1

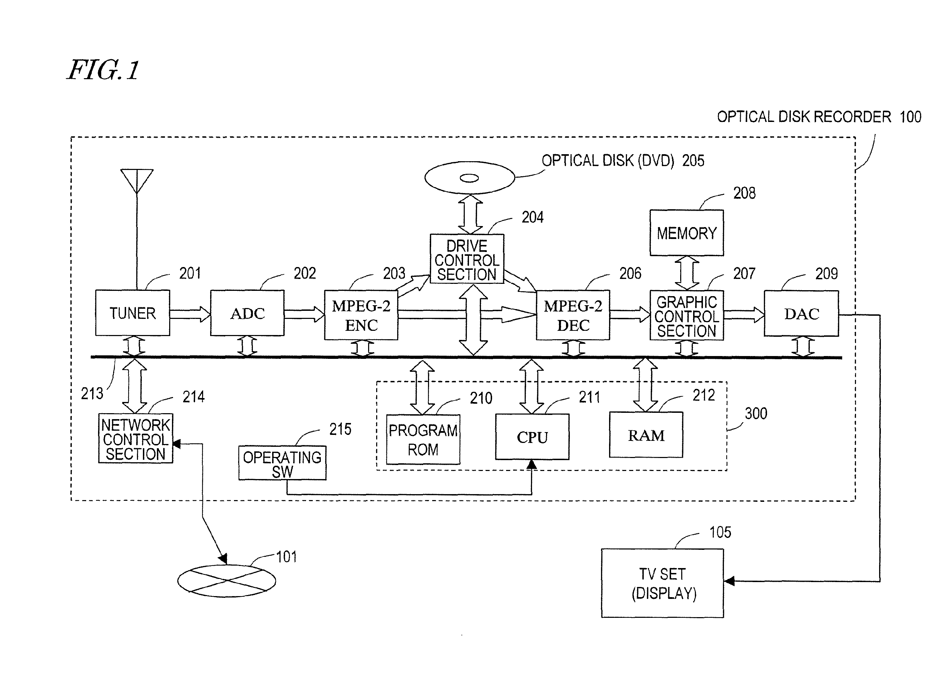

FIG. **1** shows an arrangement of functional blocks in an optical disk recorder **100** according to a first preferred embodiment of the present invention. The optical disk recorder **100** has a program recording function, i.e., the function of receiving a program signal that has been transmitted from a broadcaster, generating a data stream based on the signal, and recording the data stream on an optical disk. The optical disk may be a DVD-RAM or a Blu-ray Disc (BD), for example, but is supposed to be a DVD-RAM in this preferred embodiment. The program signal received may be either a signal representing an analog broadcast program or a signal representing a digital broadcast program. A configuration for recording an analog broadcast program is shown in FIG. **1.**

The optical disk recorder **100** is connected to a TV set **105.** And the user can get a program recorded by the optical disk recorder **100** and can get the program played back and presented on the TV set **105** by the optical disk recorder **100.** The optical disk recorder **100** is also connected to a network **101** such as the Internet such that the user can set his or her recording schedule on the optical disk recorder **100** over the network **101** as will be described later.

First, it will be outlined how the optical disk recorder **100** carries out scheduled recording processing. The optical disk recorder **100** performs a scheduled recording operation in accordance with scheduling information. The scheduling information is set for each and every program scheduled to be recorded and includes time information, showing the broadcast start time and broadcast end time of the program, and the channel number thereof. The optical disk recorder **100** receives the scheduling information from the user and retains it before the broadcast start time of the program. A CPU built in the optical disk recorder **100** gives instructions on when to start or finish recording the program in accordance with the time information of the program. The program signal is received and the recording operation is started or finished in accordance with those instructions.

One of the features of the optical disk recorder **100** of this preferred embodiment lies in that if scheduling information for multiple programs has been set, the recorder **100** specifies by reference to their time information, a number of consecutive programs according to schedule among the multiple programs scheduled to be recorded, outputs an instruction to start recording at the broadcast start time of the first one of the consecutive programs, and outputs an instruction to finish recording at the broadcast end time of the last one of the consecutive programs. The recording operation is performed continuously without a break since the start of recording has been instructed and until the end of recording is instructed. As a result, the recording starting and finishing processes, which need to be performed in the prior art every time a single program is recorded, have only to be performed once apiece before the continuous recording operation is started and after the continuous recording operation is finished, respectively. Consequently, the non-recordable period can be shortened significantly and the respective programs can be recorded without missing any part of them. Also, processing of this type just changes the recording start and end times and there is no need to provide any additional processor. Thus, the size of the processor is not increased, either.

The "consecutive programs according to schedule" may be defined by any of various criteria. "A number of programs" means that the number of programs is two or more. In this example, however, it will be described by what criterion it is determined whether two programs are consecutive or not. First, in the example shown in FIG. **15,** Program **A** that is scheduled to end at the time **T** and Program **B** that is scheduled to start at the time **T** may be regarded as two "consecutive program according to schedule" because there is no time interval between them. Alternatively, if the interval between the broadcast end time of Program **A** and the broadcast start time of Program **B** is within a predetermined amount of time (e.g., 1 minute and 30 seconds), then Programs **A** and **B** may also be regarded as two consecutive programs. Also, even if the interval between the broadcast end time of Program **A** and the broadcast start time of Program **B** is shorter than the sum of the time it takes to get the program recording finishing process done and the time it takes to get the program recording starting process done by the optical disk recorder **100** (e.g., the amount of time **t2** shown in FIG. **15),** Programs **A** and **B** may also be regarded as two consecutive programs. In the latter example, the time it takes to get the program recording finishing or starting process done changes with the encoding rate or the write rate on the optical disk, and therefore, does not always have to be fixed.

Hereinafter, the functions of the respective components of the optical disk recorder **100** shown in FIG. **1** and then the processing done by the optical disk recorder **100** will be described in detail.

The optical disk recorder **100** includes a tuner **201,** an A/D converter **202,** an MPEG-2 encoder **203,** a drive control section **204,** an MPEG-2 decoder **206,** a graphic control section **207,** a memory **208,** a D/A converter **209,** a CPU bus **213,** a network control section **214,** an operating switch **215** and a system control section **300.** In FIG. **1,** the optical disk **205** is shown within the optical disk recorder **100.** However, the optical disk **205** is removable from the optical disk recorder **100** and is not an integral part of the optical disk recorder **100.**

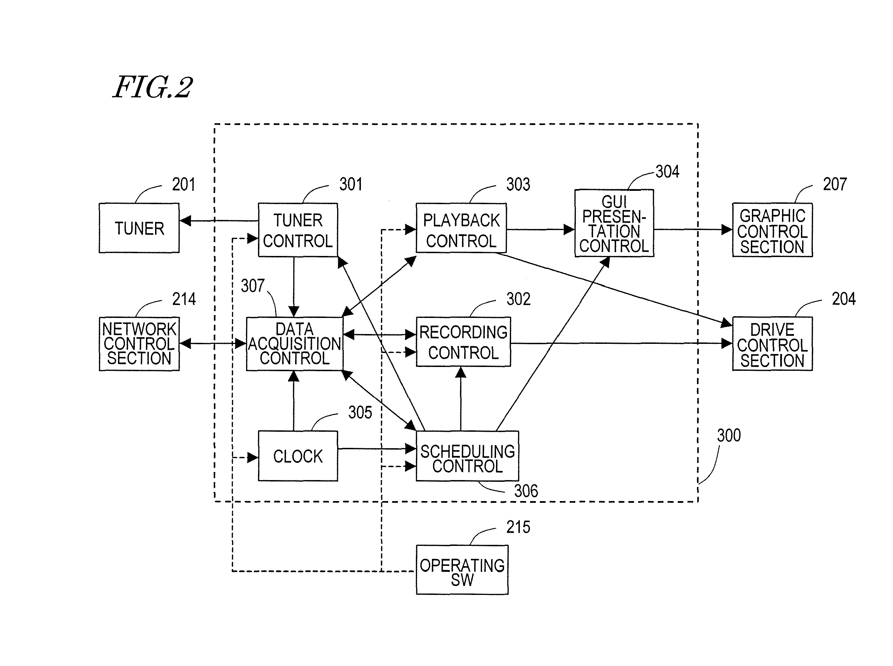

First, the system control section **300** outputs an instruction to start recording and an instruction to finish the recording in accordance with the scheduling information and the other components execute the scheduled recording operation in accordance with the instructions. The system control section **300** will be described more fully later with reference to FIG. **2.**

The tuner **201** tunes itself to, and receives, an analog broadcasting wave that has been transmitted from a broadcaster and outputs the video and audio signals of the program to the A/D converter **202,** which converts the input signals into digital ones and supplies them to the MPEG-2 encoder **203.** On receiving the instruction to start recording, the MPEG-2 encoder **203** (which will be simply referred to herein as an "encoder **203")** compresses and encodes the supplied digital data into the MPEG-2 format, generates an MPEG-2 program stream compliant with the DVD Video Recording standard (which will be referred to herein as a "program stream") and passes it to the drive control section **204.** This processing is continued until the encoder **203** receives the instruction to finish the recording. To perform the compression coding, the encoder **203** includes a buffer (not shown) for temporarily storing frame data and so on.

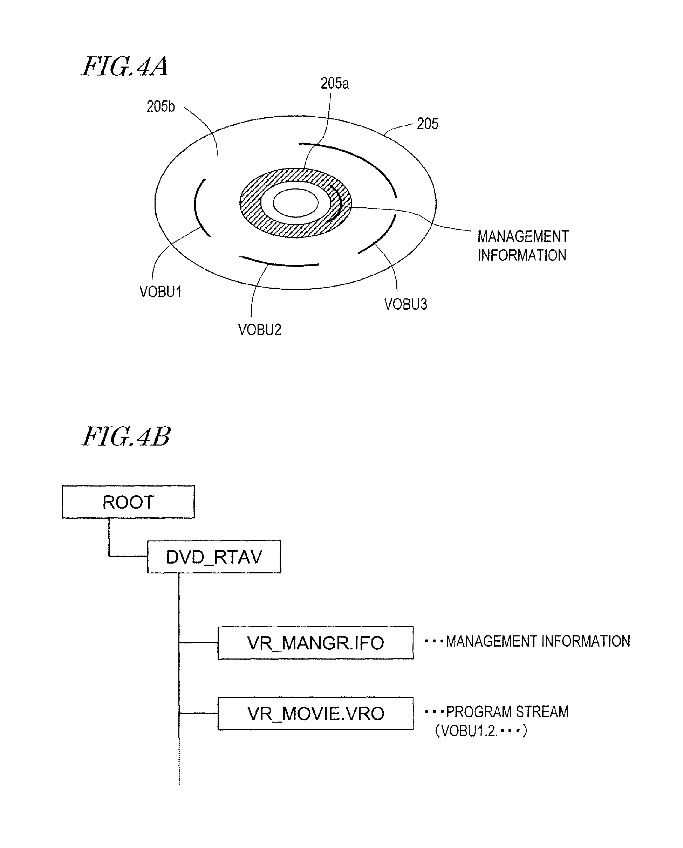

The drive control section **204** controls the operation of reading and writing data from/on the optical disk **205** by moving the optical head (not shown). The drive control section **204** performs a recording starting process on receiving the instruction to start recording, and then receives a program stream and starts writing it on the optical disk **205.** Also, when the program stream is no longer input after having received the instruction to finish recording, the drive control section **204** ends the write operation and performs a recording finishing process. The write operation is continued until the program stream is no longer input because the data being processed by the encoder **203** may be output until then. The data structure of the program stream and the method of writing the program stream on the optical disk **205** will be described later with reference to FIGS. **4A** through **6.**

On the other hand, in playing back the recorded program, the drive control section **204** sets the optical disk **205** in a playable state and reads data from the optical disk **205.** Then, the drive control section **204** outputs the read data to the MPEG-2 decoder **206.** The MPEG-2 decoder **206** (which will be simply referred to herein as a "decoder **206")** expands the MPEG-2 compression-encoded data supplied, converts it into decompressed data and then passes it to the graphic control section **207.** The graphic control section **207** is connected to the internal computer memory **208** and realizes an on-screen display (OSD) function. For example, the graphic control section **207** combines any of various menu pictures with the video and outputs the resultant synthetic image to the D/A converter **209.** In response, the D/A converter **209** converts the input OSD synthetic image and audio data into analog data and outputs them.

The CPU bus **213** is a path for transferring signals in the optical disk recorder **100.** The tuner **201,** A/D converter **202,** encoder **203,** drive control section **204,** decoder **206,** graphic control section **207,** and D/A converter **209** are all connected to the CPU bus **213.** In addition, the respective components of the system control section **300** to be described below are also connected to the CPU bus **213.**

The network control section **214** has an interfacing function for connecting the optical disk recorder **100** to the network **101** and exchanges data over the network **101.** The data is the scheduling information that has been transmitted by the user over the network **101.** The operating switch **215** is a switch that allows the user to select a channel on, or get a recording or playback operation done by, the optical disk recorder **100.** The operating switch **215** may further include an input device such as a keyboard that allows the user to enter his or her searching data or a mouse that allows the user to select his or her desired searching data. The network control section **214** is connected to the CPU **211** (to be described later) of the system control section **300** by way of the CPU bus **213.** On the other hand, the operating switch **215** is directly connected to the CPU **211.** A signal generated by turning the operating switch **215** is supplied to the CPU **211.**

The system control section **300** controls the overall processing including the flow of signals in the optical disk recorder **100,** and includes a program ROM **210,** the CPU **211** and a RAM (memory) **212,** which are all connected to the CPU bus **213.** A software program for controlling the optical disk recorder **100** is stored in the program ROM **210.**

The CPU **211** reads out and executes the program, thereby generating a control signal to carry out the processing as defined by the program. Then, the CPU **211** outputs the control signal to respective components by way of the CPU bus **213.** The memory **212** has a work area to store the data that is necessary for the CPU **211** to execute the program. For example, the CPU **211** may execute the software program stored in the program ROM **210** by using the CPU bus **213.**

Next, the functional configuration of the system control section **300** will be described with reference to FIG. **2,** which shows an arrangement of functional blocks for the system control section **300.** In FIG. **2,** the tuner **201,** graphic control section **207** and other blocks are also shown for reference.

When the CPU **211** executes the computer program stored in the program ROM **210,** the respective functional blocks of the system control section **300** are realized as real functions of the CPU **211.** Alternatively, each of these functional blocks may also be implemented as a hardware circuit that operates under the control of the CPU **211.** In the following description, each of these functional blocks is supposed to be provided as a hardware component for convenience sake. For example, the tuner control block **301** shown in FIG. **2** will be referred to herein as a "tuner control section **301".** It should be noted that if these functions are implemented by means of software, they are realized by the internal processing of the CPU **211.**

The system control section **300** includes a tuner control section **301,** a recording control section **302,** a playback control section **303,** a GUI presentation control section **304,** a clock **305,** a scheduling control section **306,** and a data acquisition control section **307.**

The tuner control section **301** is connected to the tuner **201** by way of the CPU bus **213** so as to control the channel selection and reception done by the tuner **201.** During a scheduled recording operation, the tuner control section **301** receives an instruction on the channel selection from the scheduling control section **306.** In response to the notification from the scheduling control section **306,** the recording control section **302** generates and outputs an instruction to start or finish recording. The instruction to start or finish recording is output to not only the drive control section **204** but also to the tuner **201,** encoder **203** and so on that are connected to the CPU bus **213.** Also, when the program finishes being recorded in response to the instruction to finish recording, the recording control section **302** generates program stream's management information (such as VOB or CELL). The management information may be generated once for each program stream, which has been recorded through a single recording session that was carried out since the instruction to start recording was received and until the instruction to finish recording was received. The management information is transmitted to the drive control section **204** and then written on the optical disk **205.** The details of the management information and its write operation will be described later.

The playback control section **303** is connected to the drive control section **204** by way of the CPU bus so as to issue an instruction to execute a playback operation to the drive control section **204.** Furthermore, the playback control section **303** transmits the program title information of a program to be played back to the GUI presentation control section **304** and the broadcaster information and on-air date/time information of the program to the data acquisition control section **307,** respectively. The GUI presentation control section **304** is connected to the graphic control section **207** by way of the CPU bus so as to instruct the graphics control section **207** to present a GUI screen. More specifically, the GUI presentation control section **304** transmits the OSD screen data, which will eventually be presented on the display device **105,** to the graphics control section **207.** The clock **305** provides current time data to the data acquisition control section **307** and scheduling control section **306.**

The scheduling control section **306** manages the content of the entered recording schedule as the scheduling information and notifies the recording control section **302** of the times to start and finish the programmed recording in accordance with the scheduling information. Also, the scheduling control section **306** instructs the tuner control section **301** to select channels.

The following Table 1 shows examples of scheduling information for multiple programs entered. Each item of scheduling information is stored in the memory **212** and its contents are managed by the scheduling control section **306.**

**Table 1**

| Scheduled Recording # | On-air date | Broadcast start time | Broadcast end time | Channel |
|---|---|---|---|---|
| 1 | 02/01/2004 | 7:00 | 7:45 | 2 |
| 2 | 02/01/2004 | 7:45 | 8:00 | 2 |
| ··· | ··· | ··· | ··· | ··· |
| 7 | 02/10/2004 | 19:00 | 21:24 | 6 |
| 8 | 02/10/2004 | 21:25 | 22:00 | 4 |
| 9 | 02/10/2004 | 22:05 | 22:54 | 10 |
| ··· | ··· | ··· | ··· | ··· |

As can be seen from Table 1, each item of scheduling information is generated on a program-by-program basis. Each item of scheduling information may include pieces of information showing the on-air date, broadcast start time and broadcast end time of a program (which will be collectively referred to herein as "on-air date and time information") and channel information showing the channel number (or broadcaster's name) and is given a scheduled recording number.
Such a piece of scheduling information may be entered using either the operating switch **215** or over the network **101.**

When the preset broadcast start or end time comes, the scheduling control section **306** may notify the recording control section **302** of that. In response to the notification, the recording control section **302** may output an instruction to start or finish recording immediately. However, to record the beginning of a program without fail, the scheduling control section **306** may notify the recording control section **302** of that a little earlier and the recording control section **302** may also output the instruction to start recording somewhat earlier with the amount of time it takes to get the recording starting process done taken into account. Also, to avoid missing the end of a program, the scheduling control section **306** may notify the recording control section **302** of that a little later and the recording control section **302** may also output the instruction to finish recording somewhat later with the amount of time it takes to get the recording finishing process done taken into account. It should be noted that even if the instruction to start recording is actually output earlier than the broadcast start time, the phrase "the instruction to start recording is output *at* the broadcast start time" is used herein. Likewise, even if the instruction to finish recording is actually output later than the broadcast end time, the phrase "the instruction to finish recording is output at the broadcast end time" is used herein.

The operating switch **215** is connected to the tuner control section **301,** the recording control section **302,** the playback control section **303,** the clock **305** and the scheduling control section **306** and may output instructions on channel selection, recording, playback, clock adjustment, schedule entering and so on to the respective connected blocks.

The data acquisition control section **307** is connected to the network control section **213** by way of the CPU bus **213** and sends out data about the scheduling information received to the scheduling control section **306.**

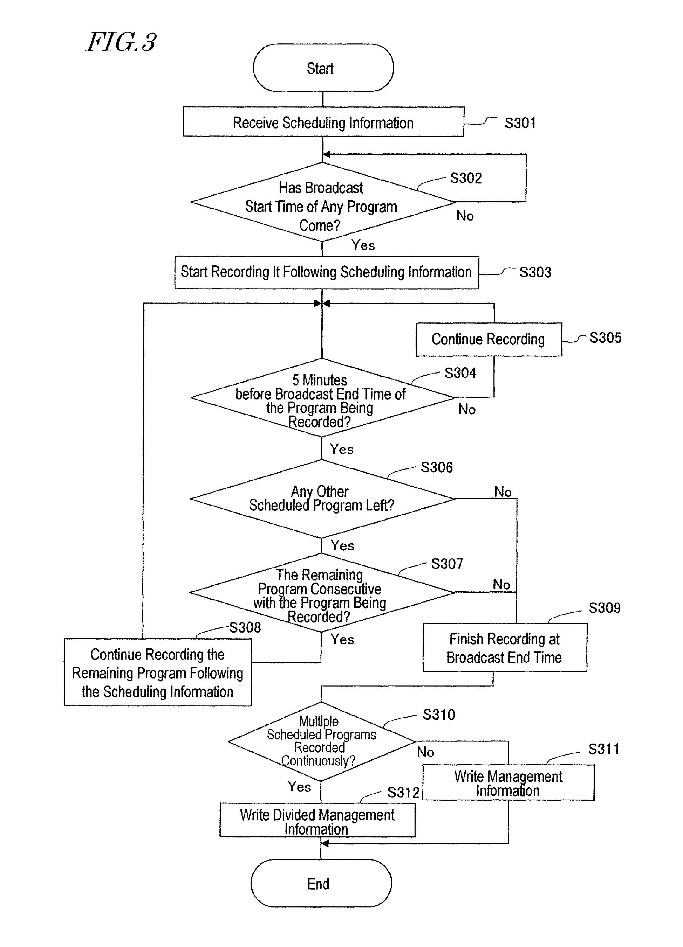

Hereinafter, it will be described with reference to FIG. **3** how the optical disk recorder **100** carries out the scheduled recording processing. FIG. **3** shows the procedure of scheduled recording processing to be done by the optical disk recorder **100.** First, in Step **S301,** the scheduling control section **306** of the system control section **300** receives scheduling information. Suppose scheduling information for multiple programs have already been entered as shown in Table 1, for example. Next, in Step **S302,** the scheduling control section **306** determines whether or not the broadcast start time of any scheduled program has come. If the answer is YES, the recording control section **302** outputs an instruction to start recording in Step **S303.** As a result, a channel is selected by the tuner **201** in accordance with the scheduling information and the ADC **202,** encoder **203** and drive control section **204** operate to start a recording operation. Thereafter, the process advances to Step **S304.**

In Step **S304,** the scheduling control section **306** determines whether or not it is five minutes before the broadcast end time of the program being recorded. It should be noted that the setting of five minutes is just an example and may be changed arbitrarily. If the answer is NO, the process goes back to Step **S305.** On the other hand, if the answer is YES, then the process advances to Step **S306.** In Step **S305,** the recording operation is continued. After that, the decision step **S304** is carried out again.

In Step **S306,** the scheduling control section 306 checks the scheduling information entered to see if any other scheduled program is left. If the answer is YES, the process advances to Step **S307.** Otherwise, the process advances to Step **S309.**

In Step **S307,** the scheduling control section **306** determines whether or not the remaining program is consecutive with the program being recorded. More specifically, the scheduling control section **306** finds the broadcast end time of the program being recorded and the broadcast start time of the remaining program by reference to the scheduling information, thereby determining, by the criteria described above, whether or not the program being recorded and the remaining program may be regarded as "multiple consecutive programs according to schedule".

Suppose the scheduling control section **306** regards these two programs as consecutive programs if the interval between the broadcast end time of the program being recorded and the broadcast start time of the remaining program is within 1 minute and 30 seconds, for example. In that case, the scheduling control section **306** finds the program with scheduled recording number 1 in Table 1 to be a program being recorded and the program with scheduled recording number 2 to be a consecutive program. Also, the scheduling control section **306** finds the program with scheduled recording number 7 in Table 1 to be a program being recorded and the program with scheduled recording number 8 to be a consecutive program. But the scheduling control section **306** regards the program with scheduled recording number 9 as non-consecutive with respect to the program with scheduled recording number 8.

If it has been determined that there is another consecutive program (which will be referred to herein as a "succeeding program"), then the succeeding program starts being recorded continuously in the next processing step **S308** in accordance with the scheduling information. In this case, the recording control section **302** never outputs any instruction to finish recording. That is why the tuner **201,** ADC **202,** encoder **203** and drive control section **204** start recording the succeeding program immediately without interrupting their processing at all. Thereafter, the process goes back to Step **S304.** If channels need to be changed to record the succeeding program, then the scheduling control section **306** instructs the tuner control section **301** to change channels.

Meanwhile, in Step **S309,** the scheduling control section **306** notifies the recording control section **302** that the broadcast end time of the program has come. In response to this notification, the recording control section **302** outputs an instruction to finish recording, when the recording operation of the program being recorded ends and the process advances to Step **S310.**

In Step **S310,** the scheduling control section **306** determines whether or not multiple scheduled programs have been recorded continuously. This decision can be made easily because the scheduling control section **306** has already determined in Step **S307** whether or not there is a consecutive program. If the answer is NO, the process advances to Step **S311.** On the other hand, if the answer is YES, then the process advances to Step **S312.**

In Step **S311,** the drive control section **204** writes the management information of the program stream, representing the program recorded, on the optical disk **205.** The management information is a piece of information that is needed to play back a program based on a program stream and is generated by the recording control section **302** that has output the instruction to start recording and the instruction to finish recording. The processing step **S311** is carried out in a situation where multiple programs have not been recorded continuously. That is why management information about only one program is generated by the recording control section **302.**

On the other hand, in Step **S312,** the drive control section **204** writes management information, which has been divided by the recording control section **302,** on the optical disk **205.** More specifically, a single piece of management information is generated for each program stream that has been recorded through a single recording session that was carried out since the instruction to start recording was received and until the instruction to finish recording was received. Accordingly, if a continuous recording operation has been performed by the processing method of this preferred embodiment, only a single piece of management information for playing back the overall program stream, including multiple programs, continuously has been generated. It is difficult to access each program according to this management information. That is why to increase the handiness of this optical disk recorder for the user, management information that enables him or her to access and play back each individual program is required.

The scheduling control section **306** can get various types of information that contributes to identifying each program (e.g., the number of programs that have been recorded continuously, the start and end times of each of those programs and the recording duration thereof). Thus, the management information is divided by utilizing the information collected in the scheduling control section **306** to define management information for each of those programs.

Hereinafter, a program stream representing a program and the management information thereof will be described with reference to FIGS. **4A** and **4B.** FIG. **4A** shows an optical disk **205** on which a program stream and its management information have been written. The optical disk **205** may be divided into an inner management area **205a** and a data area **205b** surrounding the management area **205a.** The management information is written on the management area **205a** and the program stream is written on the data area **205b.** FIG. **4A** shows that video object units (VOBUs) #1 through #3, forming parts of the program stream, have been written on the data area **205b.**

FIG. **4B** shows the file management structure of the file system on the optical disk **205.** The management information is written on a VR_MANGR.IFO file and the program stream is written on a VR_MOVIE.VRO file. There is only one VR_MANGR.IFO file, in which multiple pieces of management information may be included. Just one VR_MOVIE.VRO file is provided to have a program stream, including multiple VOBUs, written thereon. Every time a recording operation has been done, a program stream is added to this file and the start address, size, presentation time and other parameters of each VOBU are defined by each piece of management information. The file system of the optical disk **205** may have other files such as a backup file on which the VR_MANGR.IFO file has been backed up but those additional files are not shown in FIG. **4B.**

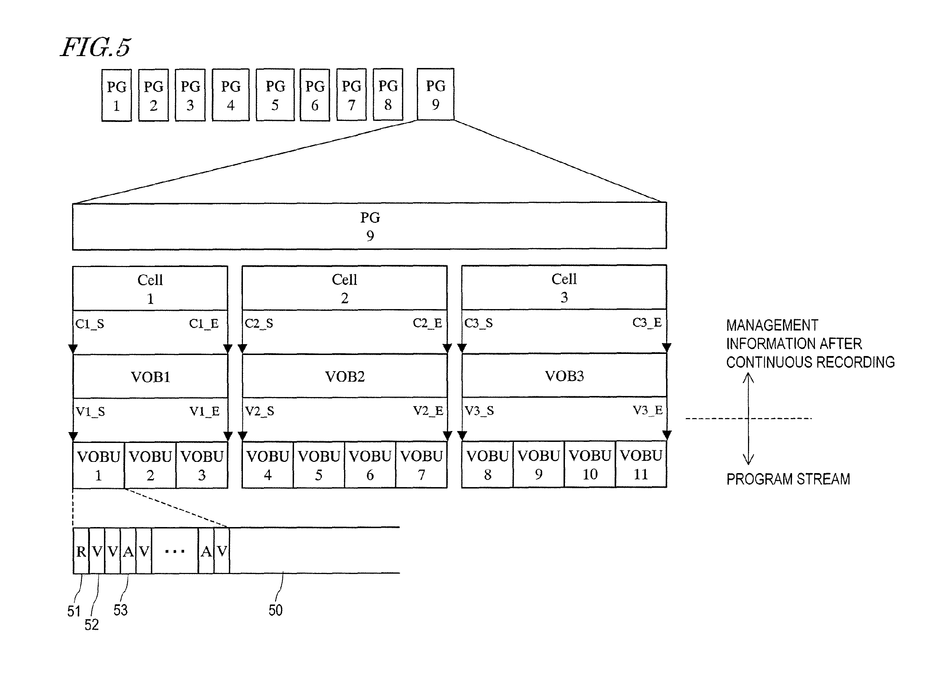

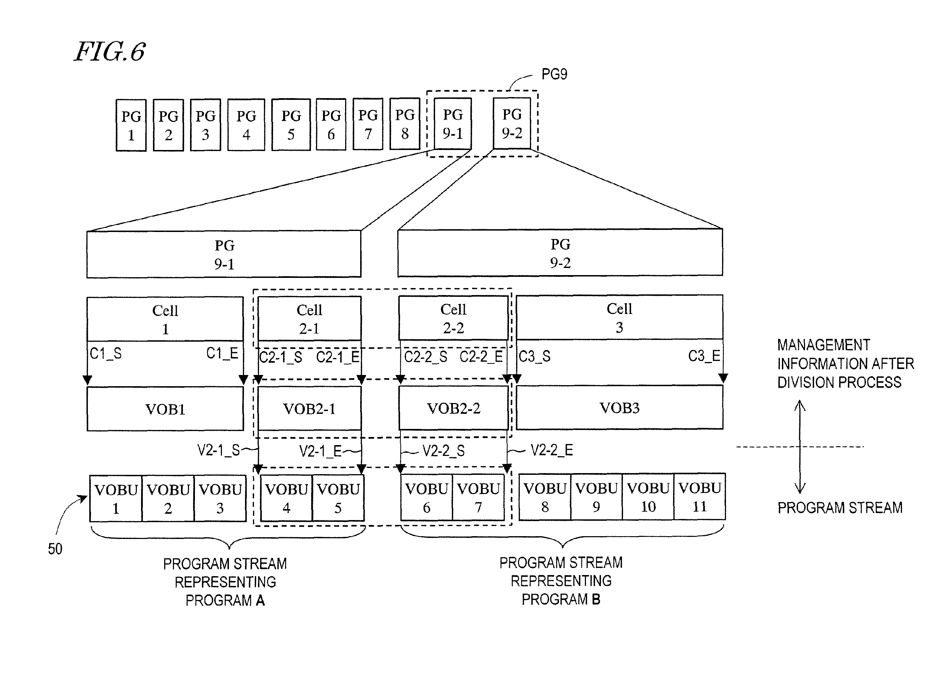

Hereinafter, it will be described with reference to FIG. **5** how the correlation between the management information and the program stream becomes after a continuous recording operation has been performed according to this preferred embodiment. After that, the process of dividing the management information will be described with reference to FIG. **6.**

FIG. **5** shows the correlation between the management information and the program stream after a continuous recording operation has been performed. The management information is generated as a single program **PG** as a result of a single recording session. Suppose a program **PG #9** has been generated by the recording control section **302** after the continuous recording operation of this preferred embodiment has been performed. Program chain information (PGC) that is defined so as to include more than one program is also provided but not shown in FIG. **5.**

PG #9 includes multiple pieces of management information (or Cells) #1 through #3. The start time and end time are defined for each of those cells. In FIG. **5,** the start and end times of cell #1 are identified by C1_S and C1_E, respectively, which correspond to Start_PTM and End_PTM of each cell according to the Video Recording standard. The same statement is applicable to cells #2 and #3, too.

Next, each cell is associated with a video object (VOB), which is another type of management information. Information about start and end times is also included in each VOB. In FIG. **5,** the start and end times of VOB #1 are identified by V1_S and V1_E, respectively, which correspond to Start_PTM and End_PTM of each VOB according to the VR standard. The same statement is applicable to VOBs #2 and #3, too.

Usually, the start and end times of a cell agree with those of a VOB, and the values of V1_S and V1_E are stored in C1_S and C1_E, respectively. Cells and VOBs are provided separately in order to introduce a playlist defining an arbitrary playback path. A playback operation using a playlist has no direct relation with the present invention and the description thereof will be omitted herein.

The management information VOB defines its correspondence to a VOBU, which is a data unit of a program stream. Specifically, a VOB is defined so as to include more than one VOBU of a program stream. In FIG. **5,** VOB #1 corresponds to VOBUs #1 through #3, VOB #2 corresponds to VOBUs #4 through #7, and VOB #3 corresponds to VOBUs #8 through #11.

Each of those VOBUs forming a program stream consists of multiple packs, each of which has a fixed data length of 2,048 bytes. An RDI pack **51** is arranged at the top of each VOBU and is followed by video packs **52** that store the video data of a program thereon and audio packs **53** that store its audio data thereon.

In FIG. **5,** the program stream is logically split into Cells #1 through #3. However, their boundaries defined have nothing to do with the boundary between the programs that have been recorded continuously. That is why it is difficult to access respective programs based on PG #9 only.

Thus, the process of dividing the management information will be described next with reference to FIG. **6.** The division process is carried out by the recording control section **302** of the system control section **300.** FIG. **6** shows a correspondence between the management information that has been subjected to the division process and the program stream. Suppose the process is carried out in a situation where Programs **A** and **B** have been recorded continuously, the data of the former program **A** is stored in VOBUs #1 through #5, and the data of the latter program **B** is stored in VOBUs #6 through #11. The scheduling control section **306** knows the time when Program **A** switches into Program **B** and can find a VOBU corresponding to that point in time.

The recording control section **302** splits each VOB and each Cell as pieces of management information, thereby managing the former group of VOBUs #1 through #5 and the latter group of VOBUs #6 through #11 as two different programs. Specifically, the recording control section **302** splits VOB #2 into VOB #2-1 and VOB #2-2 and Cell #2 into Cell #2-1 and Cell #2-2, respectively. And then the recording control section **302** splits PG #9 into PG #9-1 and PG #9-2. In this case, the start and end times of the respective VOBs and Cells are modified. In FIG. **6,** the start and end times of VOB #2-1 are identified by V2-1_S and V2-1_E and the start and end times of Cell #2-1 are identified by C2-1_S and C2-1_E, for example. The start and end times of each split Cell may be set equal to those of its associated split VOB.

As a result, the recording control section 302 can generate management information that defines a new hierarchical structure from a PG down to VOBUs included in a VOB. This management information is written by the drive control section **204** on the optical disk **205.** As a result, even if a continuous recording operation has been performed, management information can be generated on a program-by-program basis. For example, to play back Program **B,** the playback control section **303** may start its playback at the start time **C2-2_S** of the top Cell #2-2 of PG #9-2. In this example, the management information of multiple programs is supposed to be stored as a single management information file. Alternatively, those pieces of management information may be stored as different files.

If the end time of the former program **A** (i.e., the end time **V2-1_E** of VOB #2-1) coincides with the start time of the latter program **B** (i.e., the start time **V2-2_S** of VPB #2-2), then video and audio can be played back without a break between Programs **A** and **B.** This is effective in a situation where a continuous recording operation is supposed to be performed only when there is no need to change channels between Programs **A** and **B.** This is because the video and so on never discontinues in the interval between Programs **A** and **B** under this condition and because neither Program **A** nor Program **B** is interrupted while the user is actually viewing them as broadcasts. Consequently, the user can view and listen to the recorded programs almost as if he or she were viewing and listening to the original broadcasts in real time.

Meanwhile, a time lag may also be caused between the end time of the former program **A** (i.e., the end time **V2-1_E** of VOB #2-1) and the start time of the latter program B (i.e., the start time **V2-2_S** of VPB #2-2). This is effective in a situation where a continuous recording operation has been performed with channels changed in the interval between Programs **A** and **B.** If channels are changed during a continuous recording operation, the presentation of video will be disturbed (e.g., the video may disappear from the screen or freeze for a moment). Thus, by providing an interval that is at least long enough to change channels between the end time of Program **A** and the start time of Program **B,** the playback of Program **B** can be started smoothly at a point in time when video and audio can already be output with good stability. It should be noted that the interval between the end time of Program **A** and the start time of Program **B** is not a playback period. That is why when the recording operation is finished, the recording control section **302** may find the end time of Program **A** and the start time of Program **B** by reference to the management information and define that interval as non-playback period by playback control information. If necessary, the stream data may also be deleted at the same time. According to the present invention, as the recording operation is performed continuously without stopping the processing done by the encoder **203** and so on, the recording finishing and starting processes, which should be performed in the interval between two programs in the prior art, no longer need to be performed in that interval. Thus, according to the present invention, there is virtually no non-recordable period anymore. In addition, since just one encoder is provided, the size of the processor is never increased, either.

What is more, even if the period in which the presentation of the video is disturbed while channels are being changed is regarded as a "non-recordable period", that period is much shorter (e.g., a matter of 1 second or so) than the sum of the amounts of time it takes to get the recording finishing and starting processes done.

Strictly speaking, a small time lag might be caused between a VOBU boundary and a switching point between the programs that have been recorded to fulfill the recording schedule. In that case, the VOBU boundary in the vicinity of the switching point may be regarded as a virtual program switching point and the start and end times of respective programs may be defined with respect to that switching point.

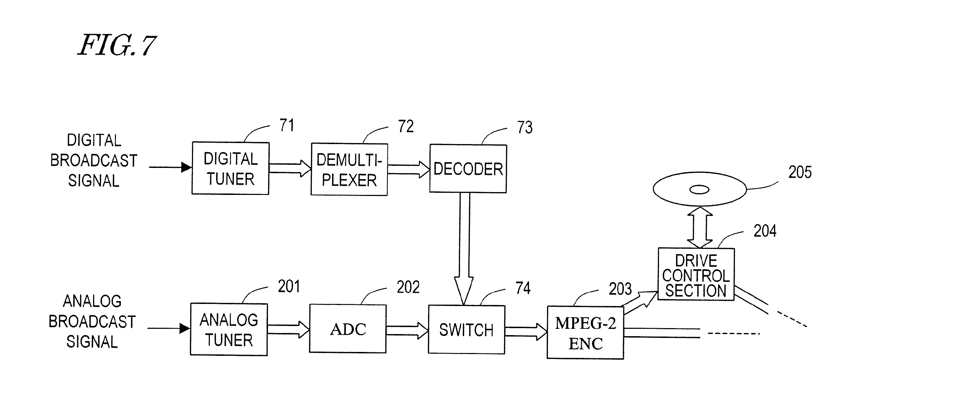

The optical disk recorder **100** of the preferred embodiment described above is supposed to have a single tuner as shown in FIG. **1.** However, the processing of the present invention is also realized even by a device including two or more tuners. FIG. **7** shows a configuration for a portion of an optical disk recorder including a plurality of tuners, which means that this optical disk recorder may include components that are shown in FIG. **1** but not in FIG. **7.** Among the components shown in FIG. **7,** those identified by the same reference numerals as the counterparts shown in FIG. **1** (e.g., the analog tuner **201,** the ADC **202** and so on) are just as already described with reference to FIG. **1.** The functions of those common components have been already described with reference to FIG. 1 and will not be described again. Thus, the following description will be focused on newly added components.

The optical disk recorder shown in FIG. **7** further includes a digital tuner **71,** a demultiplexer **72,** a decoder **73** and a switch **74.** By using these components, the optical disk recorder can record a digital broadcast program. Specifically, the digital tuner **71** receives a digital broadcast radio wave and gets it as a transport stream. Then, the digital tuner **71** extracts only a stream representing a selected program from multiple digital broadcast programs that have been multiplexed together in the transport stream and sends the stream to the demultiplexer 72. In response, the demultiplexer **72** separates and outputs packets including only the video data of the program (i.e., video TS packets) and packets including only its audio data (i.e., audio TS packets). The decoder **73** decodes the video data and the audio data separately, thereby generating and outputting video and audio digital signals as baseband signals.

The switch **74** selects either a signal representing a digital broadcast program or a signal representing an analog broadcast program. That is to say, the switch **74** passes the signal supplied from the decoder **73** to the encoder **203** while a digital broadcast is being viewed or recorded but passes the signal supplied from the ADC **202** to the encoder **203** while an analog broadcast is being viewed or recorded. While a program is being viewed or recorded normally, the switch **74** operates in accordance with a path selection instruction that has been given by the recording control section **302.** On the other hand, while a scheduled recording operation is being performed by reference to the scheduling information, the switch **74** operates in accordance with a path selection instruction that has been given by the scheduling control section **306.** It should be noted that the scheduling information is entered into the optical disk recorder so as to select among programs that are receivable at the respective tuners. The encoder **203** encodes the baseband signal that has been output from the switch **203.**

Such an optical disk recorder with multiple tuners can also perform a continuous recording operation on consecutive scheduled programs. Its processing is similar to, but is different in the following respects from, that done by the optical disk recorder **100** described above.

Specifically, if multiple consecutive programs according to schedule are received at different tuners (which is a typical situation where channels need to be changed during a continuous recording operation), one of the tuners that is not currently used for recording starts to be tuned in advance before the broadcast start time of the latter scheduled program. For example, if the former program is an analog broadcast program and if the latter program is a digital broadcast program, then the reception and channel selection of the digital broadcast program are started before the former program ends. In recording a high definition (HD) digital broadcast on a DVD, the broadcast needs to be once decoded, have its data rate converted into a recordable rate for a DVD, and then be recorded (which is called "re-encoding recording"). That is why the optical disk recorder starts demultiplexing and decoding processes beforehand. When the broadcast end time of the former program has come after that, the baseband signals to be supplied to the encoder will be changed by turning the switch. At that point in time, no channel selection operation needs to be performed anymore.

By starting the operations in advance in this manner, the input signals can be changed instantaneously simply by turning the switch **74.** As a result, the non-recordable period caused by channel selection can be cut down to an extremely short period. As for the amount of time for changing channels, the re-encoding recording operation of a digital broadcast takes an even longer time than the channel selection on an analog tuner because demultiplexing and decoding processes need to be done additionally. That is why this method is particularly effectively applicable to recording a digital broadcast as described above.

Generally speaking, a digital broadcast recorder often includes not only a digital tuner but also an analog tuner. In that case, there is no need to newly provide an additional tuner to perform a continuous recording operation. That is to say, to carry out the present invention, there is no need to add a relatively large-scale tuner circuit but just the switch **74** needs to be added. As a result, the size and product cost of the overall processor can be kept relatively small. In the preferred embodiment described above, the recorder is supposed to include a digital tuner and an analog tuner. Alternatively, the recorder may include multiple tuners of the same type. For example, the recorder may include two analog tuners only or two digital tuners only. Furthermore, even three or more tuners may be provided. For instance, the recorder may include four digital and/or analog tuners in total. If the recorder includes multiple tuners of the same type, then the recorder may change channels using those tuners and the switch in combination. However, if the programs to be recorded are scheduled on the same channel, the continuous recording operation is preferably carried out by using only one tuner. This is because if there is absolutely no need to eliminate the non-recordable period or the disturbance of the video presentation that would be caused when channels need to be changed. On top of that, there is no need, either, to set the recording end time slightly later for one tuner and the encoder and set the recording start time slightly earlier for the other tuner and encoder in order to avoid recording errors. Consequently, the same scene will never be recorded twice redundantly in the two programs that have been recorded continuously.

In the preferred embodiment described above, it is determined by the broadcast start and end times of programs and the need of channel change whether or not those programs need to be recorded continuously. Alternatively or additionally, other criteria may be adopted as well. For example, the encoding process by the encoder **203** may be usually switched according to various parameters. That is why if the user instructs that multiple consecutive scheduled programs be recorded at mutually different bit rates and in different formats, for example, then the recording operation does not have to be performed continuously. On the other hand, if he or she instructs that those programs be recorded at the same rate and in the same format, then the recording operation may be carried out continuously.

### EMBODIMENT 2

In the first preferred embodiment described above, the optical disk is supposed to be a DVD-RAM and the optical disk recorder 100 is supposed to write management information and a program stream compliant with the DVD Video Recording standard on the DVD-RAM. However, the same program may also be recorded on a BD having a larger storage capacity than a DVD-RAM or in a different recording format, too. It would be easy for those skilled in the art to modify the present invention in various other ways.

Thus, a second preferred embodiment of the present invention, in which a DVD-RAM is replaced with a BD as an alternative optical disk to record a program thereon, will be described below. A stream that has been generated based on an MPEG-2 transport stream and its management information are written on a BD. Hereinafter, differences between these two types of disks and the information to be written on a BD will be described first. After that, the configuration and operation of an optical disk recorder according to this preferred embodiment will be described.

The differences between a BD and a DVD-RAM lie in highest recordable data rate, maximum recordable data size, and the type of the data stream recorded (i.e., whether it is a transport stream or a program stream). Also, in a BD and a DVD-RAM, the file management structures of their file systems have different names. In the BD Rewritable format, a data stream is recorded as at least one MPEG-2 transport stream file (mt2s). The file may be either divided into multiple units corresponding to respective scheduled programs or a single file to which scheduling information should be added one after another. A transport stream representing a broadcast wave is made up of TS packets, each having a size of 188 bytes. However, when the transport stream is recorded on a BD, an extension header of 4 bytes is added to each TS packet and the recording operation is carried out on a packet unit (having a total size of 192 bytes) basis. A stream consisting of those 192-byte packet units is given a special name "clip AV stream". In generating a clip AV stream from a transport stream representing a digital broadcast and recording it, there is no need to perform re-encoding, and therefore, video data, audio data, management information (SI and PSI information) and so on can be written without debasing their quality. In this case, the video data and/or audio data may be partially re-encoded and the SI and PSI information may be partially rewritten. Even so, the packet structure is still maintained. After the stream has been recorded, a clip information file (ClipInfo file with an extension "clpi") is generated for each stream file and a playlist file (PlayList file with an extension "rpls") may be generated for each unit and those types of management information are written.

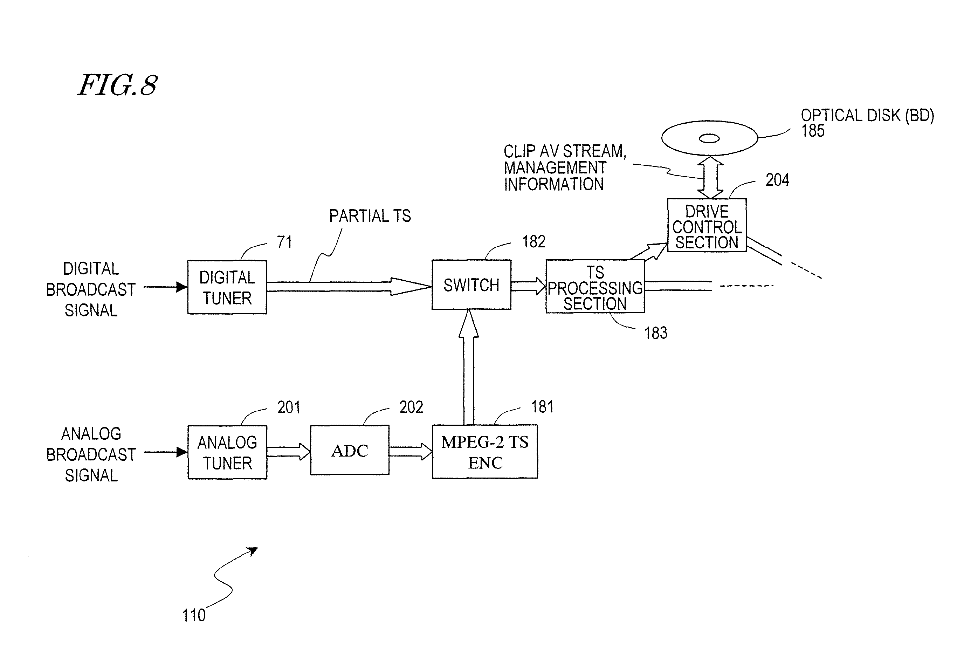

Hereinafter, the configuration and operation of an optical disk recorder 110 according to this preferred embodiment will be described next. FIG. 8 shows the arrangement of (some) functional blocks in the optical disk recorder **110** of this preferred embodiment. The configuration shown in FIG. **8** may replace the tuner **201,** encoder **203** and drive control section **204** shown in FIG. **1.** The optical disk recorder **110** also includes the other components shown in FIG. **1.** However, those components have substantially the same functions and operations as the counterparts shown in FIG. **1** and the illustration and description thereof will be omitted herein.

The optical disk recorder **110** of this preferred embodiment shares the common main features as the optical disk recorder **100** of the first preferred embodiment except that the recorder **110** records a program on a BD and therefore uses a data stream and management information in different formats. Specifically, if multiple items of scheduling information have been received, the optical disk recorder **110** specifies, by reference to their time information, a number of consecutive programs according to schedule among the multiple scheduled programs, outputs an instruction to start recording at the broadcast start time of the first one of the consecutive programs, and outputs an instruction to finish recording at the broadcast end time of the last one of the consecutive programs. The recording operation is performed continuously without a break since the start of recording has been instructed and until the end of recording is instructed. As a result, the recording starting and finishing processes, which need to be performed in the prior art every time a single program is recorded, have only to be performed once apiece before the continuous recording operation is started and after the continuous recording operation is finished, respectively. Consequently, the non-recordable period can be shortened significantly and the respective programs can be recorded without missing any part of them. The "consecutive programs according to schedule" are also defined as in the first preferred embodiment described above.

The optical disk recorder **110** shown in FIG. **8** includes a digital tuner **71,** an analog tuner **201,** an ADC **202,** an MPEG2-TS encoder **181,** a switch **182,** a TS processing section **183** and a drive control section **204.**

The digital tuner **71** receives a digital broadcast radio wave and gets it as a transport stream. Then, the digital tuner **71** extracts TS packets forming the stream of the selected program and TS packets storing the control information associated with the transport stream from multiple digital broadcast programs that have been multiplexed together in the transport stream (TS) and outputs those packets. A stream consisting of those TS packets is called a "partial TS". The partial TS is sent to the switch **182.** The digital tuner **71** does not have to be built in the optical disk recorder **110** but may be provided as a separate circuit. In that case, the TS that has been received at the digital tuner **71** may be sent as it is to the optical disk recorder **110.** Alternatively, a partial TS including the extracted data about a particular program may be sent to the optical disk recorder **110.**

The analog tuner **201** and the ADC **202** have the same configurations and operations as the counterparts of the first preferred embodiment described above, and generate and output video and audio digital signals as baseband signals from an analog signal.

The MPEG2-TS encoder **181** (which will be simply referred to herein as a "TS encoder **181")** performs MPEG-2 compression encoding on the video and audio baseband signals, stores them in TS packets and then multiplexes these video and audio TS packets together, thereby outputting a TS. This TS includes data about a single program selected and is identical with the partial TS described above in this sense. The TS generated is sent to the switch **182.**

In accordance with the instruction given by the recording control section **302,** the switch **182** selects either the partial TS supplied from the digital tuner **71** or the TS supplied from the TS encoder **181** and outputs the selected one to the TS processing section **183.**

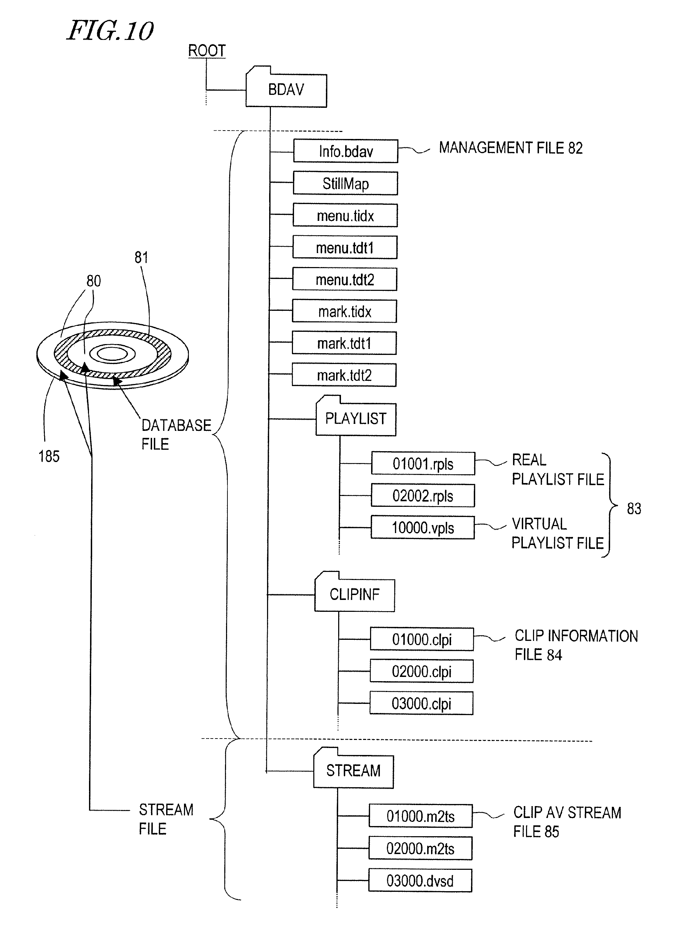

The TS processing section **183** adds an extension header of 4 bytes to each TS packet of 188 bytes, thereby generating a clip AV stream. The drive control section **204** writes the clip AV stream on an optical disk (BD in this preferred embodiment) **185.** In addition, the drive control section **204** also writes the management information, which has been generated by the recording control section **302,** on the optical disk **185.** The management information is separately stored in a number of files. The type and role of the management information relating to the processing of this preferred embodiment will be described later with reference to FIGS. **10** through **13.**

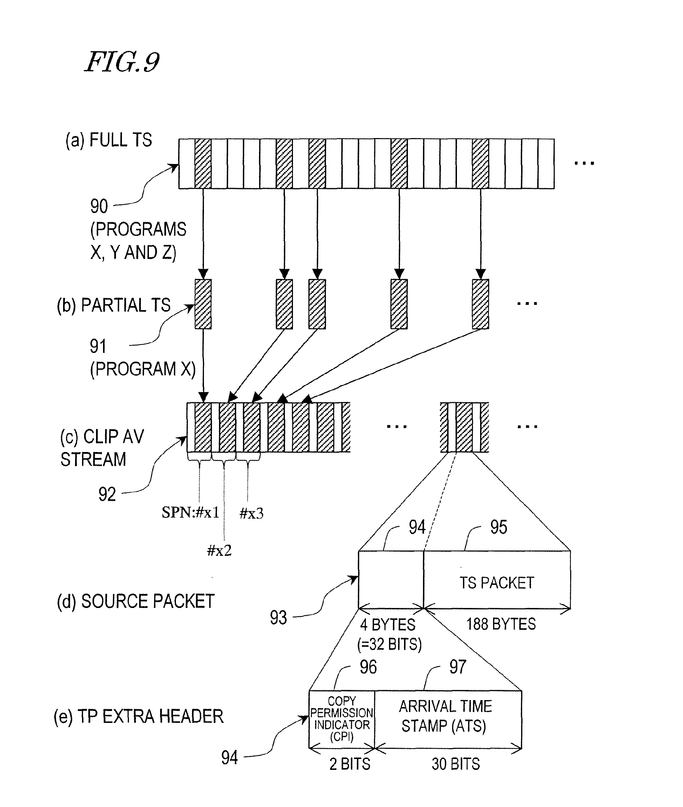

Hereinafter, it will be described specifically with reference to FIG. **9** how the TS processing section **183** generates the clip AV stream. In the following example, a digital broadcast recording process will be described.

Portions **(a)** through **(e)** of FIG. **9** show a correlation between a transport stream and a clip AV stream. For reference, portion **(a)** of FIG. **9** shows a full TS **90,** which is a stream got by the digital tuner **71.** In the full TS **90,** TS packets, including the data of three programs **X, Y** and **Z,** may be arranged in series, for example. Portion **(b)** of FIG. **9** shows a partial TS **91** that has been generated by the digital tuner **71** from the full TS **90.** The partial TS **91** is a stream formed by extracting some packets from the continuous full TS **90.** Thus, in the partial TS **91,** those packets are dispersed discretely on the time axis. However, the intervals between those packets have been adjusted by the sender of the full TS so as to satisfy the conditions to make the decoder decode appropriately. Those "conditions" are laid down by the MPEG standard such that the buffer memory of a TS system target decoder (T-STD), defined as an ideal model of an MPEG-2 TS, does not cause an overflow or underflow.

The partial TS **51** may include the TS packets about the program **X,** for example.

Portion **(c)** of FIG. **9** shows a clip AV stream **92.** In the clip AV stream **92,** source packets are arranged continuously. Those source packets are identified by source packet numbers (SPN) #1, 2, 3 and so on.

Portion **(d)** of FIG. **9** shows the data structure of a source packet **73,** which has a fixed data length of 192 bytes. More specifically, each source packet **73** is formed by adding an extension header (a TP extra header) **94** of 4 bytes to the top of a TS packet **75** of 188 bytes. The source packetizer **261** adds the TP extra header **94** to the top of one of the TS packets that form a partial TS, thereby generating a source packet.

Portion **(e)** of FIG. **9** shows the data structure of the TP extra header **94.** The TP extra header **94** is made up of a copy permission indicator (CPI) **96** of 2 bits and an arrival time stamp (ATS) **97** of 30 bits. The copy permission indicator (CPI) **96** indicates, by its bit value, how many times (i.e., zero times (copy prohibited), only once or an unlimited number of times) part or all of the clip AV stream **92** may be copied. The arrival time stamp (ATS) **97** describes the time at a precision of 90 kHz.

It should be noted that the clip AV stream **92** shown in portion **(c)** of FIG. **9** is written on the optical disk **185** using a set of 32 source packets (6 KB) as a unit. Such a unit is called an "aligned unit". The aligned unit is defined because the BD uses sectors each having a size of 2 KB and can align the sectors on the basis of 32 source packets.

The processing to be done to record a digital broadcast has been described. However, the same statement applies to recording an analog broadcast. In recording an analog broadcast, the partial TS **91** shown in FIG. **9(b)** may be sent to the TS processing section **183** to generate the clip AV stream **92** shown in FIG. **9(c).**

Next, it will be described with reference to FIG. **10** how the clip AV stream and its management information are written on the optical disk **185.** FIG. **10** shows a storage area on the optical disk **185** and its directory/file structure. The optical disk **185** includes a gathered file area **81** and a real-time data area **80.** The gathered file area **81** has a storage capacity of several hundreds of megabytes. In the gathered file area **81,** stored are management information files (or database files) for managing the playback of the clip AV stream. As shown in FIG. **10,** there are multiple types of database files including a management file (Info.bdav) **82,** playlist files (01001.rpls and 10000.vpls) **83** and a clip information file (01000.clpi) **84.** These database files are accessed rather frequently. That is why the gathered file area **81** is located at the center of the storage area of the optical disk **185** that can be accessed efficiently. Also, the database files are indispensable for playing back a moving picture stream such as the clip AV stream. Thus, an error contained there, if any, would cause a serious trouble. For that reason, the database files are backed up on the same optical disk **185.**

On the other hand, the real-time data area **80** has a storage capacity of 23 to 27 gigabytes. In the real-time data area **80,** stored is a stream file representing the clip AV stream (e.g., a clip AV stream file (01000.m2ts) **85).** Unlike the database files described above, a read error of a stream file, if any, would have only a local effect. But the stream file needs to be read continuously. That is why write processing is carried out so as to guarantee continuous reading rather than reducing the errors. Specifically, the clip AV stream file **85** is written on a continuous area (i.e., a continuous logic sector) with a minimum size of 12 Mbytes. This minimum size of data to be written is called an "extent".

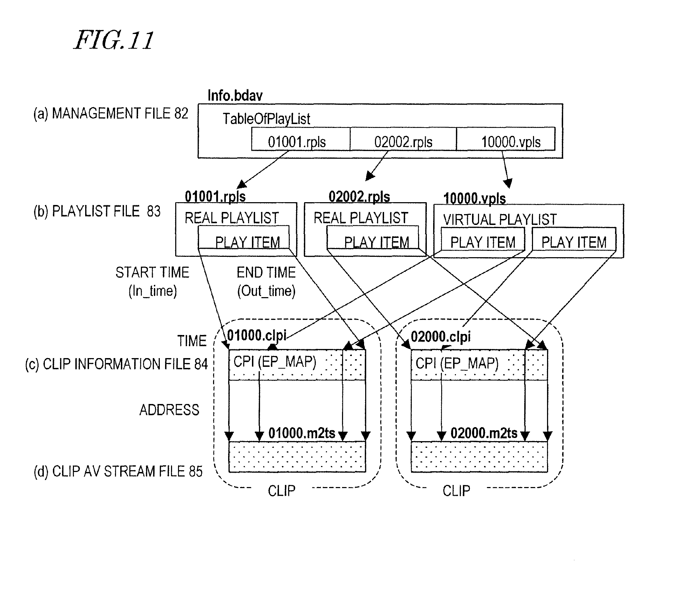

Next, the correlation among the management file **82,** the pp file **83,** the clip information file **84** and clip AV stream file **85** will be described with reference to portions **(a)** through **(d)** of FIG. **11,** which shows a relationship between the management information and the stream data. The management information is shown in portions **(a)** through **(c)** of FIG. **11,** while the stream data is shown in portion **(d)** of FIG. **11.** Portion **(a)** of FIG. **11** shows a table of playlists described in the management file (Info.bdav) **82.** That is to say, a table of playlist file names that signify the playlists on the optical disk **185** is stored in the management file **82.** As used herein, the "playlist" refers to a piece of information that defines a playback path for a part or all of more than one clip AV stream.

Portion **(b)** of FIG. **11** shows playlists that are described in the playlist file **83** and that have extensions rpls and vpls. The playlists are classifiable into real playlists and virtual playlists. A real playlist may be generated by the recorder **100** when stream data is written for the first time, for example, and its playback path is specified as from the beginning through the end of moving pictures. Meanwhile, a virtual playlist is specified by the user with respect to the stream data written, and therefore, the user can specify any locations and ranges he or she likes.

Each range of a playlist is defined by respective play items in the playlist. Specifically, the play items describe a start time (In_time) corresponding to the presentation start time and an end time (Out_time) corresponding to the presentation end time. The start and end times are described as presentation time stamps (PTS) specifying the presentation time of a video frame played back and the output time of an audio frame reproduced. Just after a recording operation has been finished, a real playlist usually defines only one play item to specify the start and end times of moving pictures. Meanwhile, a virtual playlist may define any number of play items. Multiple play items may be provided for a single virtual playlist and may be described so as to specify mutually different moving picture streams.

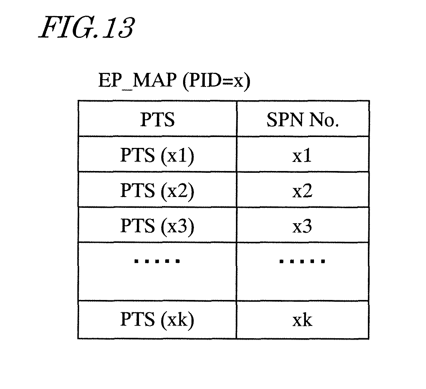

Portion **(c)** of FIG. **11** shows a time/address conversion table (EP_map) **84** that is described in clip information files **84** with an extension clpi. The conversion table (EP_map) **84** shows a correspondence between the presentation time of a clip AV stream and an address at which the data to be presented at that time is stored. By reference to this conversion table **84,** the address in the clip AV stream, at which the data to be presented at that time is stored, can be detected based on the start time (In_time) and end time (Out_time) specified by the play item. The principle of conversion using this conversion table **84** will be described more fully later with reference to FIGS **13** through **15.**

Portion **(d)** of FIG. **11** shows a moving picture stream that is stored in clip AV stream files **85** with an extension m2ts. In this portion **(d)** of FIG. **11,** the files "01000.m2ts" and "02000.m2ts" are clip AV stream files.

As shown in portions **(c)** and **(d)** of FIG. **11,** a single clip information file is provided for each single clip AV stream file on the optical disk **185.** Such a combination of a clip AV stream file and a clip information file will be referred to herein as a "clip".

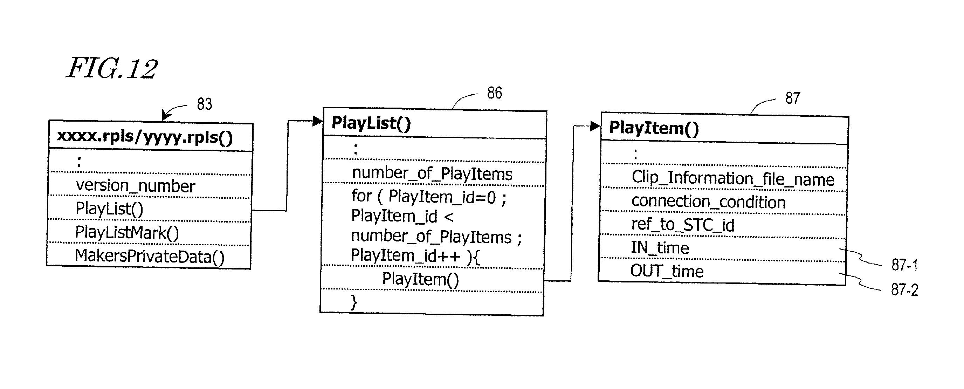

FIG. **12** shows the information (entries) stored in the playlist file **83** and its data structure. In a file **83** with an extension "rpls" or "vpls", included is a playlist entry **86** shown as PlayList(), which corresponds to the playlist described above. A play item (PlayItem) entry **87** is provided as a low-order entry of the playlist entry **86.** In the play item entry **87,** play items (PlayItems) #1, 2, and so on are described. In each of those play items, stored are the file name of a clip information file to be played back (Clip_Information_file_name), an identifier for identifying an STC (ref_to_STC_id), a start time (In_time) **87-1,** an end time (Out_time) **87-2** and so on. Each playlist file **83** also includes a field (not shown) for giving a title. In this preferred embodiment, a playlist is eventually generated on a program-by-program basis while multiple programs are recorded continuously one after another. Accordingly, information showing the title of a program is stored in each playlist file **83.**

FIG. **13** shows the data structure of a time/address conversion table (EP_MAP) stored in the clip information file **84.** On this conversion table, a time stamp **PTS** representing a time is associated with a source packet number **SPN** representing an address. As far as video is concerned, this time stamp **PTS** is that of each I-picture arranged at the top of a GOP compliant with an MPEG standard. Also, the source packet number **SPN** is the number of a source packet in which the top data of an I-picture played back at the time corresponding to the PTS is stored. Each source packet has a data size of 192 bytes. Therefore, if the source packet number is known, the number of bytes as counted from the top of a clip AV stream (i.e., the storage location of the data) can be figured out and that data can be accessed easily and just as intended. On this conversion table, the actual values of the source packet numbers x1, x2, ... and xk are not always consecutive integers but may also be integers with an increment of two or more.

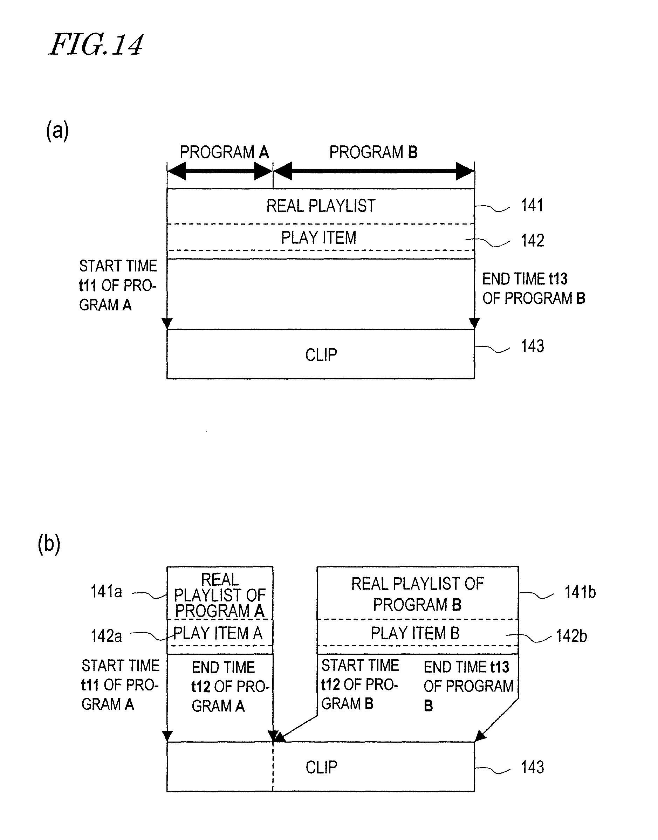

Hereinafter, the processing done by the optical disk recorder **110** of this preferred embodiment will be described with reference to FIGS. **14(a)** and **14(b).** Suppose Programs **A** and **B** scheduled to be recorded have been regarded as consecutive according to schedule by the optical disk recorder **110** and have been recorded continuously. More specifically, Program **B** is supposed to have been recorded after Program **A** was recorded.

FIG. **14(a)** shows a relationship between a real playlist **141** and a clip **143** just after Programs **A** and **B** have been recorded on the optical disk (a BD in this case) **185.** The clip **143** includes, in combination, a clip AV stream file and a clip information file that are associated with Programs **A** and **B.** The real playlist **141** associated with the clip 143 instructs that playback be performed from the start time **t11** of Program **A** through the end time **t13** of Program **B.** More specifically, the real playlist **141** includes a play item **142** that defines the start time **t11** of Program **A** as a presentation start time (In_time) and the end time **t13** of Program **B** as a presentation end time (Out_time). In FIG. **14(a),** a boundary is shown between Programs **A** and **B.** However, this boundary is drawn just for the sake of convenience. Thus, no information showing the boundary is included in an actual playlist. Also, the optical disk recorder **110** may either write the real playlist **141** on the optical disk **185** or just store the list in the internal RAM **212** without writing it on the optical disk **185.**

FIG. **14(b)** shows a relationship between the split playlists **141a, 141b** and the clip **143.** The CPU **211** of the optical disk recorder **110** splits the real playlist **141** shown in FIG. **14(a),** thereby generating the real playlists **141a** and **141b** that are associated with Programs **A** and **B,** respectively. Play items **142a** and **142b** are included in the real playlists **141a** and **141b,** respectively. The play item **142a** defines the start time **t11** of Program **A** as a presentation start time (In_time) and the end time **t12** of Program **A** as a presentation end time (Out_time). The other play item **142b** defines the start time **t12** of Program **B** as a presentation start time (In_time) and the end time **t13** of Program **B** as a presentation end time (Out_time).

The end time **t12** of Program **A** and the start time **t12** of Program **B** can be found by checking the set times of the scheduled programs. The optical disk recorder **110** is saving those set times and can provide the real playlists **141a** and **141b** for Programs **A** and **B,** respectively. By using the real playlist **141a,** Program **A** can be played back from the beginning through the end. And by using the real playlist **141b,** Program **B** can be played back from the beginning through the end.

In this example, the end time of Program **A** and the start time of Program **B** are supposed to be identical with each other. However, these times do not always have to be identical. Alternatively, some time lag may be caused between them as long as the criteria of the "consecutive programs according to schedule" as already described for the first preferred embodiment are met. In that case, a play item associated with each program describes the start time and the end time of that program. Nevertheless, the start and end times do not have to be so accurate but may have slightly shifted.

According to this preferred embodiment, it should be noted that multiple programs that have been recorded continuously can be played back on a program-by-program basis by splitting the playlist. As shown in FIG. **14(b),** the clip **143** is not split but remains the same since the programs have been recorded. In other words, no changes are made on the clip information file **84** in the clip **143.**

The clip information (such as EP_MAP) in the clip information file on a BD corresponds to a VOB on a DVD. In the first preferred embodiment described above, a complicated process (such as that shown in FIG. 6) needs to be performed in order to split a VOB in a program stream.

Also, although video and audio might sometimes be out of sync with each other if a VOB were split, such a problem never happens on a BD. Video packs and audio packs have been multiplexed together in a program stream. Accordingly, packs including sound to be reproduced synchronously with a picture are arranged before and after that video pack. VOBUs forming a VOB are generated by reference to video playback duration. That is why audio and video packs to be played back synchronously with each other may sometimes be included separately in two consecutive VOBUs. And if the VOB is split at the boundary between those two consecutive VOBUs, then the end of the former program will have discontinued audio. On a BD on the other hand, the clip information is never divided but a playlist is just generated on a program-by-program basis with respect to the presentation time. As a result, video and audio can be synchronized with each other.

In this preferred embodiment, the two real playlists **141a** and **141b** are provided because the respective attributes (e.g., the titles) of Programs **A** and **B** can be described in that case. Alternatively, two play items **A** and **B** may be provided for a single real playlist. Even if such an arrangement is adopted, there is no need to make any changes on the clip **143** but only the play items needs to be processed. Consequently, the processing load is also light. In the preferred embodiment described above, a single real playlist is supposed to be generated just after multiple programs have been recorded continuously and then split into real playlists for those programs. However, this is just an exemplary method of making real playlists for respective programs. Thus, the processing step of generating a single playlist and then splitting it does not have to be performed. Alternatively, when one of multiple programs being recorded continuously ends, a real playlist may be completed. And immediately after that (i.e., when the next program starts), another playlist may be newly generated, thereby making real playlists for respective programs. According to this method, when the last program ends and its real playlist is completed, real playlists will have been made for all programs.

It should be noted that the broadcast sources of Programs **A** and **B** may be combined arbitrarily. Program **A** may be either an analog broadcast program or a digital broadcast program, while Program **B** may also be either an analog broadcast program or a digital broadcast program. That is to say, both of Programs **A** and **B** may be analog broadcast programs or digital broadcast programs.

In the first and second preferred embodiments described above, the optical disk recorders are supposed to write information on a DVD-RAM and on a BD, respectively. Optionally, each of these optical disk recorders may write information on a hard disk instead of, or in addition to, the optical disk. In the first preferred embodiment, a program may be recorded on a hard disk drive (HDD) in a program stream format. On the other hand, in the second preferred embodiment, a program may be recorded on a hard disk drive (HDD) in a clip AV stream format.

The present invention may also be implemented as a device for recording a program on any other type of storage medium such as a magnetic tape or a flash memory card, not optical disks or hard disk described above. It should be noted that if programs are recorded continuously on a VCR, which is designed to record analog broadcast programs, by the processing method of the present invention, then there is no need to perform the management information division process described above because no management information will be used in that case. That is to say, the programs will be just recorded continuously.

The recording functions of the program recorder of the present invention may be implemented by a computer program that defines the processing procedure shown in FIG. **3.** By executing such a computer program, the computer (e.g., a CPU) of the program recorder can operate the respective components of the data processor and realize the processing described above. The computer program may be either circulated on the market after having been stored on a CD-ROM or any other appropriate storage medium or downloaded over telecommunications lines such as the Internet. Then, the computer system may operate as a player having the same function as the program recorder described above.

### INDUSTRIAL APPLICABILITY

The present invention provides a program recorder that can record the beginning and end of each of multiple consecutive programs scheduled to be recorded without missing any part of them and without increasing the size of the processor.

## Claims

1. A program recorder comprising:
a receiving section for receiving scheduling information, which includes time information that specifies broadcast start time and broadcast end time of a program scheduled to be recorded;
a memory for storing the scheduling information;
a control section for outputting an instruction to start or finish recording processing based on the scheduling information; and
a recording processing section for performing the recording processing by receiving a data stream representing the program and recording the data stream on a storage medium, the recording processing section starting recording the program in accordance with the instruction to start and finishing recording the program in accordance with the instruction to finish,
wherein if the scheduling information is set for multiple programs,
the control section specifies, by reference to the time information, a number of consecutive programs according to schedule among the multiple programs scheduled to be recorded, outputs the instruction to start recording at the broadcast start time of the first one of the consecutive programs, outputs the instruction to finish recording at the broadcast end time of the last one of the consecutive programs, and generates management information to play back each of the consecutive programs, and
the recording processing section records a single data stream including the consecutive programs and the management information on the storage medium.

2. The program recorder of claim 1, further comprising an encoder for generating the data stream by encoding a program signal,
wherein the receiving section further receives the program signal, and
wherein the encoder starts encoding in response to the instruction to start and continues encoding until the encoder receives the instruction to finish.

3. The program recorder of claim 1, wherein the receiving section starts receiving a program signal in response to the instruction to start, generates the data stream based on partial data that has been extracted from the program signal received, and continues receiving the program signal until the receiving section receives the instruction to finish.

4. The program recorder of claim 1, wherein if no channel change is needed between the consecutive programs, the control section outputs the instruction to finish at the broadcast end time of the last program.

5. The program recorder of claim 2, further comprising a switch for selecting one of multiple program signals in response to a control signal,
wherein the receiving section includes a plurality of tuners, each of which receives one of the program signals representing mutually different programs and outputs the signal to the switch, and
wherein the control section generates the control signal based on the scheduling information and outputs the control signal to the switch, and
wherein the encoder encodes the signal that has been selected by the switch.

6. The program recorder of claim 5, further comprising a decoder for decoding data about a digital broadcast program to generate a digital broadcast program signal,
wherein one of the tuners receives the digital broadcast program signal, which is an encoded stream signal made up of multiple packets that store the data about the digital broadcast program, and
wherein the switch selects a decoded program signal as the digital broadcast program signal.

7. The program recorder of claim 5, wherein one of the tuners receives a signal representing a digital broadcast program, the signal being an encoded stream signal made up of multiple packets that store data about the digital broadcast program, and
wherein in recording the digital broadcast program, the recording processing section writes the encoded stream signal, having a packet structure, on the storage medium.

8. The program recorder of claim 2, wherein the control section generates management information in which the start and end times of each said program are specified by the time information.

9. The program recorder of claim 8, wherein if first and second programs are to go on the air consecutively, then the recording processing section generates management information in which the end time of the first program coincides with the start time of a second program.

10. The program recorder of claim 8, wherein if first and second programs are to go on the air consecutively but if channels have been changed between the first and second programs, then the recording processing section generates management information in which a predetermined time lag is caused between the end time of the first program and the start time of the second program.

11. The program recorder of claim 1, wherein the control section generates path information on a program-by-program basis as the management information.

12. The program recorder of claim 11, wherein the control section generates overall path information, which defines how to play back the consecutive programs from the start time of the first one of the programs through the end time of the last one thereof, and then divides the overall path information, thereby generating path information for each said program.

13. The program recorder of claim 11, wherein the control section generates path information, which defines how to play back each of the consecutive programs from the start time through the end time thereof, on the program-by-program basis.

14. The program recorder of claim 11, wherein the control section generates map information that associates the presentation time of each of the consecutive programs with the data storage location of the data stream to be accessed at the presentation time, and
wherein the recording processing section writes the map information on the storage medium.

15. A program recording method comprising the steps of:
receiving scheduling information, which includes time information that specifies the broadcast start time and broadcast end time of a program scheduled to be recorded;
storing the scheduling information;
controlling recording processing by outputting an instruction to start or finish the recording processing based on the scheduling information;
performing the recording processing by receiving a data stream representing the program and recording the data stream on a storage medium, the program starting being recorded in accordance with the instruction to start and finishing being recorded in accordance with the instruction to finish; and
determining whether or not the scheduling information includes multiple items,
if the scheduling information is set for multiple programs,
the step of controlling includes specifying, by reference to the time information, a number of consecutive programs according to schedule, among the multiple programs scheduled to be recorded, outputting the instruction to start recording at the broadcast start time of the first one of the consecutive programs, outputting the instruction to finish recording at the broadcast end time of the last one of the consecutive programs, and generating management information to play back each of the consecutive programs, and
the step of performing the recording processing includes recording a single data stream including the consecutive programs and the management information on the storage medium.
